# FASCICULE DE BREVET EUROPEEN

(11) **EP 1 047 257 B1**
(45) Date de publication et mention de la délivrance du brevet: **21.05.2008**
(21) Numéro de dépôt: 00401083.1
(22) Date de dépôt: 18.04.2000
(51) Int. Cl.: H04M 7/00, H04L 12/64, H04L 12/66

(54) **Système raccordant une installation téléphonique d'abonné au réseau téléphonique commuté et à un réseau numérique à haut débit**
System zur Verbindung einer Fersprechnebenstellenanlage mit dem Fernsprechnetz und mit einem digitalen Hochgeschwindigkeitsnetz
System for connecting a subscriber telephone installation with the PSTN and with a high-throughput digital network

(30) Priorité: 22.04.1999 FR 9905152
(43) Date de publication de la demande: 25.10.2000
(73) Titulaire: SAGEM Communication, 75015 Paris (FR)
(72) Inventeur: Picard, Jean-François, 94370 Sucy en Brie (FR); Lossouarn, Yann, 91300 Massy (FR)
(74) Mandataire: Cabinet Martinet & Lapoux

(56) Documents cités:
- WO-A-97/50230
- SIMEONOV P L ET AL: "INGATE: A DISTRIBUTED INTELLIGENT NETWORK APPROACH TO BRIDGE SWITCHING AND PACKET NETWORKS" PROCEEDINGS OF THE INTERNATIONAL CONFERENCE ON COMPUTER COMMUNICATIONS AND NETWORKS, 1 janvier 1997 (1997-01-01), XP002073675
- ARKKO J ET AL: "DIAL-UP SERVICE VIA THE INTEGRATED ACCESS SYSTEM" ERICSSON REVIEW,SE,ERICSSON. STOCKHOLM, no. SPEC. INT. ISS, 1 janvier 1998 (1998-01-01), pages 14-19, XP000751710 ISSN: 0014-0171

## Description

La présente invention concerne un système de raccordement entre une installation téléphonique d'abonné incluant un terminal analogique et un terminal numérique d'une part, et un commutateur téléphonique analogique et un noeud d'accès d'un réseau numérique à haut débit.

Plus généralement, l'invention concerne le raccordement d'une installation téléphonique d'abonné pouvant communiquer avec un terminal du réseau téléphonique commuté ou avec un serveur quelconque de fournisseur de service ISP (Internet Service Provider) d'un réseau numérique à haut débit (Internet).

Actuellement, une installation d'abonné classique reliée par une ligne téléphonique analogique au commutateur téléphonique local ne peut que demander ou bien une communication téléphonique de parole depuis le terminal analogique, tel qu'un poste téléphonique, à travers le réseau téléphonique commuté, ou bien une communication de données depuis le terminal numérique, tel qu'un micro-ordinateur personnel équipé d'un modem, à travers une portion locale du réseau téléphonique commuté comprenant le commutateur local, et le cas échéant à travers un réseau intermédiaire à plus grand débit du type X25 ou ATM notamment, afin d'accéder au serveur ISP. Les inconvénients d'un tel raccordement local sont bien connus :
- interdiction d'utiliser le terminal téléphonique analogique pendant que le terminal numérique est en communication avec le réseau Internet ;
- facturation des communications téléphoniques à la durée pénalisant l'abonné pendant de longues connexions avec le réseau Internet, en opposition avec la tarification au forfait des communications sur le réseau Internet ;
- occupation du commutateur téléphonique local pendant la communication avec le réseau Internet ce qui offre un risque d'encombrement et d'insatisfaction des autres abonnés locaux désirant établir des communications téléphoniques.

Une autre solution connue remédie seulement au premier inconvénient lorsque l'installation téléphonique est purement numérique et est reliée par une ligne numérique à quatre fils supportant une liaison de type RNIS à deux canaux de données B et un canal de signalisation D à un commutateur local RNIS d'un réseau numérique à intégration de services RNIS relié lui-même au réseau téléphonique commuté public et à des serveurs de fournisseur de service du réseau Internet. Outre les deux derniers inconvénients précités, l'abonné doit abandonner son matériel téléphonique analogique pour le remplacer par une installation complètement numérique.

Le document "@INGATE : A Distributed Intelligent Network Approach to Bridge Switching and Patent Networks, IEEE 97, propose une architecture de raccordement alternative mais ne permet pas de résoudre les inconvénients précités.

L'invention vise à fournir un système de raccordement téléphonique d'abonné obviant aux trois inconvénients précités sans modifier l'infrastructure existante au niveau du commutateur local analogique et en utilisant la ligne téléphonique d'abonné existante à deux fils.

A cette fin, un système de raccordement tel que défini dans l'entrée en matière comprend :
- un premier équipement comprenant un moyen pour convertir des premiers signaux analogiques transmis par le commutateur en des premiers signaux numériques, un moyen pour regrouper les premiers signaux numériques et des deuxièmes signaux numériques transmis par le noeud et destinés au terminal numérique en deux canaux numériques multiplexés transmis dans une ligne téléphonique d'abonné vers les terminaux, un moyen pour séparer deux canaux numériques multiplexés de la ligne téléphonique en des troisièmes signaux numériques relatifs à des signaux du terminal analogique et des quatrièmes signaux numériques qui sont relatifs à des données du terminal numérique et qui sont transmis vers ledit noeud, et un moyen pour convertir les troisièmes signaux numériques en des deuxièmes signaux analogiques transmis au commutateur ; et
- un deuxième équipement comprenant un moyen pour séparer les canaux numériques multiplexés transmis via la ligne téléphonique en les premiers signaux numériques et les deuxièmes signaux numériques transmis au terminal numérique, un moyen pour convertir les premiers signaux numériques séparés en les premiers signaux analogiques qui sont transmis au terminal analogique, un moyen pour convertir des deuxièmes signaux analogiques provenant du terminal analogique en des troisièmes signaux numériques, et un moyen pour regrouper les troisièmes signaux numériques précités et des quatrièmes signaux numériques transmis par le terminal numérique en deux canaux numériques multiplexés transmis dans la ligne téléphonique d'abonné.

Les premier et deuxième canaux suivant chacun des sens de transmission dans la ligne téléphonique d'abonné, c'est-à-dire dans la paire de fils existante constituant la ligne, autorise simultanément et indépendamment une communication téléphonique analogique notamment de parole entre le commutateur et le terminal analogique et une communication de données numériques entre le noeud de réseau à haut débit et le terminal numérique. Toutefois, grâce à l'aiguillage du deuxième canal opéré dans le premier équipement avant le commutateur téléphonique, les données de la communication de données numériques ne traversent pas le commutateur téléphonique local et ainsi n'encombrent pas le commutateur téléphonique par leur trafic intense et durable. Le service téléphonique classique n'est pas ainsi dégradé par les communications de données avec le réseau à haut débit (Internet).

De plus, l'abonné peut bénéficier de tarifications indépendantes pour les communications téléphoniques analogiques et pour les communications de données numériques, et ainsi bénéficier de la tarification au forfait pour les communications avec le réseau à haut débit.

En pratique, les deuxièmes canaux pour les communications de données traversant plusieurs premiers équipements de l'invention rattachés au commutateur local sont envoyés dans une voie multiplex à débit élevé desservant le noeud, tel que routeur ou pointeur, du réseau Internet. Le système de raccordement comprend alors un troisième équipement numérique commun à plusieurs premiers équipements EC pour démultiplexer un signal multiplex transmis par lé noeud en plusieurs deuxièmes signaux numériques respectivement appliqués aux moyens pour regrouper inclus dans lesdits plusieurs premiers équipements, et pour multiplexer plusieurs quatrièmes signaux numériques respectivement fournis par les moyens pour séparer inclus dans lesdits premiers équipements en un signal multiplex transmis au noeud.

La liaison numérique est de préférence du type à au moins deux canaux de données B et un canal de signalisation D à plus faible débit pour convoyer la signalisation téléphonique.

Pour le sens de transmission depuis le commutateur vers le terminal analogique, le premier équipement peut comprendre en outre des moyens pour détecter des premiers signaux de signalisation téléphonique analogiques transmis par le commutateur et un moyen pour insérer des premiers messages numériques de signalisation téléphoniques dans un canal de signalisation respectivement en réponse aux premiers signaux de signalisation détectés afin de multiplexer les deux canaux numériques avec le canal de signalisation pour les transmettre dans la ligne téléphonique d'abonné vers le deuxième équipement, et le deuxième équipement peut comprendre en outre un moyen pour extraire et analyser les premiers messages de signalisation du canal de signalisation reçus de la ligne téléphonique et des moyens pour transmettre les premiers signaux analogiques de signalisation au terminal analogique respectivement en réponse aux premiers messages de signalisation analysés.

Pour l'autre sens de transmission depuis le terminal analogique vers le commutateur, le deuxième équipement peut comprendre en outre des moyens pour détecter des deuxièmes signaux de signalisation téléphonique analogiques transmis par le terminal analogique, et un moyen pour insérer des deuxièmes messages numériques de signalisation téléphonique dans le canal de signalisation respectivement en réponse aux deuxièmes signaux de signalisation détectés afin de multiplexer les deux canaux numériques avec le canal de signalisation pour les transmettre dans la ligne téléphonique d'abonné vers le premier équipement, et le premier équipement peut comprendre en outre un moyen pour extraire et analyser les deuxièmes messages de signalisation du canal de signalisation reçus de la ligne téléphonique et des moyens pour transmettre les deuxièmes signaux analogiques de signalisation au commutateur respectivement en réponse aux deuxièmes messages de signalisation analysés.

Selon une deuxième réalisation, l'invention s'adapte aux trafics nécessaires aux communications de données entre le réseau à haut débit et le terminal numérique qui peuvent être variables et asymétriques entre eux. Pour cette deuxième réalisation, le premier équipement et l'un des deuxième équipement et terminal numérique peuvent comprendre des moyens pour assigner dynamiquement l'un des ou les deux canaux numériques suivant l'un et/ou l'autre des sens de transmission de la ligne téléphonique d'abonné à une communication de données entre le noeud et le terminal numérique en fonction des trafics de données demandés par l'un et/ou l'autre des noeud et terminal numérique.

Selon une troisième réalisation, le système de raccordement de l'invention offre la possibilité de transmettre de la voix depuis le terminal numérique à travers le réseau à haut débit (Internet).

Pour cette troisième réalisation, le deuxième équipement peut comprendre en outre un moyen pour convertir des troisièmes signaux analogiques notamment de voix provenant du terminal numérique en des messages numériques de données selon un protocole de réseau du réseau à haut débit, des moyens pour détecter des troisièmes signaux de signalisation téléphonique transmis par le terminal numérique afin de les convertir en des messages numériques de signalisation selon le protocole de réseau, un moyen pour insérer les messages de données et de signalisation selon le protocole de réseau dans un canal de signalisation afin de les multiplexer avec les deux canaux numériques dans la ligne téléphonique d'abonné vers le premier équipement, un moyen pour extraire et analyser des messages numériques de données et de signalisation selon le protocole de réseau du canal de signalisation reçus de la ligne téléphonique, un moyen pour convertir les messages numériques de données selon le protocole de réseau extraits en des quatrièmes signaux analogiques notamment de voix transmis au terminal numérique, et des moyens pour transmettre des quatrièmes signaux de signalisation téléphonique au terminal numérique en réponse aux messages de signalisation extraits selon le protocole de réseau.

Le premier équipement pour la troisième réalisation peut comprendre en outre un moyen pour extraire et analyser des messages numériques de données et de signalisation selon le protocole de réseau du canal de signalisation reçus de la ligne téléphonique afin de les transmettre, en tant que quatrièmes signaux numériques, vers ledit noeud, et un moyen pour insérer des messages de données et de signalisation selon le protocole de réseau transmis par le noeud dans le canal de signalisation afin de le multiplexer avec les deux canaux numériques pour les transmettre dans la ligne téléphonique d'abonné vers le deuxième équipement.

De préférence, la ligne téléphonique d'abonné est une ligne à deux fils qui convoie pour chaque sens de transmission au moins les deux canaux numériques multiplexés avec un canal de signalisation supportant des messages de signalisation.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 montre un système de raccordement entre des terminaux téléphoniques analogiques et numériques et un commutateur téléphonique analogique et un routeur de réseau numérique à haut débit selon l'invention ;
- la figure 2 est un bloc-diagramme détaillé du deuxième équipement, dit équipement de central, du côté du commutateur et du routeur selon une première réalisation de l'invention ;
- la figure 3 est un bloc-diagramme détaillé du premier équipement, dit équipement d'abonné, du côté des terminaux selon une première réalisation de l'invention ;
- la figure 4 est un bloc-diagramme détaillé de l'équipement de central selon une deuxième réalisation de l'invention ; et
- la figure 5 est bloc-diagramme détaillé de l'équipement d'abonné selon une deuxième réalisation de l'invention.

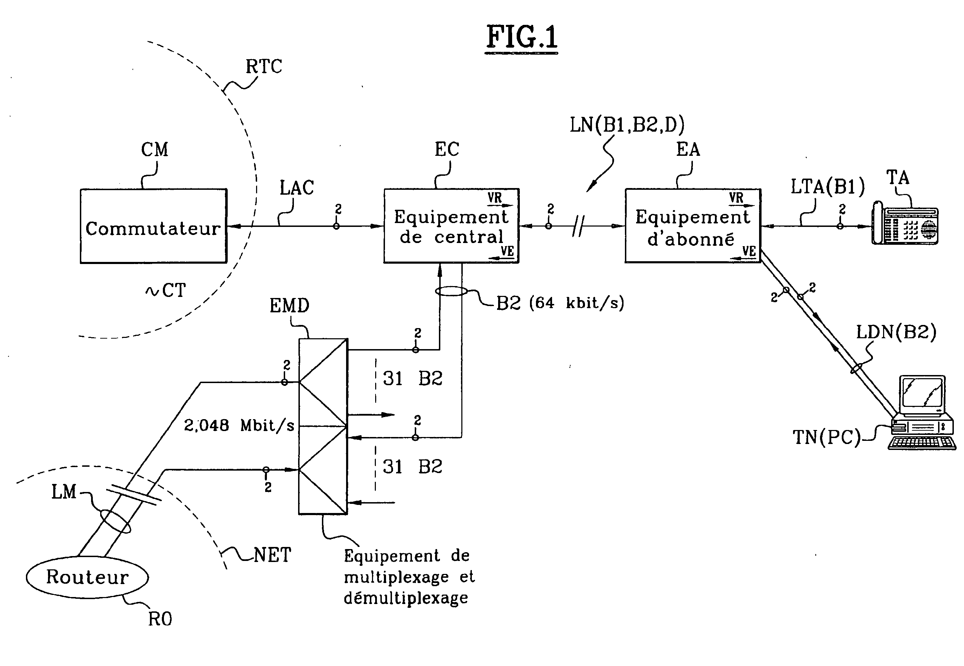

En référence à la figure 1, un système de raccordement selon l'invention raccorde une installation téléphonique d'abonné analogique et numérique comprenant essentiellement un terminal d'abonné téléphonique analogique TA, tel qu'un poste d'abonné téléphonique et un terminal d'abonné téléphonique numérique TN, tel qu'un microordinatuer personnel PC, à un commutateur téléphonique analogique CM dans un central téléphonique CT du réseau téléphonique commuté public RTC et à un noeud d'un réseau de télécommunication à haut débit, tel qu'un routeur RO du réseau internet NET.

Entre les terminaux TA et TN et le commutateur CM et le routeur RO est prévue une longue liaison numérique bidirectionnelle sous la forme de la ligne téléphonique d'abonné déjà existante, constituée par une paire de fils, dite ligne "numérique" LN. La ligne LN présente, selon l'invention, une extrémité du côté de l'installation d'abonné reliée à un premier équipement, dit équipement d'abonné EA, et une deuxième extrémité du côté du commutateur téléphonique et du routeur reliée à un deuxième équipement, dit équipement de central EC. L'équipement d'abonné EA est relié au terminal téléphonique analogique TA et au terminal téléphonique numérique TN respectivement à travers une ligne analogique à deux fils LTA et une ligne de données numérique à deux paires de fils LDN relativement courtes. L'équipement de central EC est relié à un port du commutateur CM à travers une ligne analogique relativement courte à deux fils LAC et est propre à convoyer des premiers signaux analogiques à transmettre vers ce terminal analogique TA et des deuxièmes signaux analogiques provenant du terminal analogique TA. Le routeur RO est relié par une ligne multiplex bidirectionnelle LM à débit élevé et à deux paires de fils à un équipement de multiplexage et démultiplexage EMD dont un accès est relié par une courte ligne numérique de base LNB à un accès numérique de l'équipement de central EC.

Selon la réalisation préférée décrite dans la suite de la description, la ligne LN constitue une ligne numérique bidirectionnelle qui transporte un multiplex de canaux numériques du type 2B+D aussi bien dans le sens de transmission d'une voie d'émission à deux fils VE depuis l'équipement d'abonné EA vers l'équipement de central EC que dans le sens de transmission d'une voie de réception à deux fils VR depuis l'équipement de central EC vers l'équipement d'abonné EA.

Les deux canaux B ont chacun un débit de 64 kbit/s et sont exploités en mode circuit ou en mode trame. Selon une première réalisation statique du système de raccordement, le premier canal est dédié à la transmission numérique des premiers et deuxièmes signaux analogiques échangés entre un terminal analogique TA et le commutateur CM, et le deuxième canal B2 est dédié à la transmission de deuxièmes et quatrièmes signaux de données échangés entre le terminal numérique TA et le routeur RO. Ces deux canaux B1 et B2 offrent ainsi simultanément une communication téléphonique analogique et une communication numérique de données.

Le canal D a un débit de 16 kbit/s et supporte de la signalisation entre les deux équipements EC et EA, et particulièrement des premiers et deuxièmes signaux de signalisation téléphonique produits par le commutateur CM et par le terminal analogique TA, devant être convertie numériquement pour être transmise dans la ligne numérique LN.

En pratique, le multiplex de canaux suivant chaque sens de transmission dans la ligne numérique LN offre un débit total de 160 kbit/s, les 16 kbit/s restants étant occupés notamment par un canal de maintenance et de supervision CMS à 4 kbit/s.

Dans la voie VR de l'équipement de central et la voie VE de l'équipement d'abonné, chaque paire de bits 2B de chaque canal est convertie en un symbole quaternaire 1Q selon un codage 2B1Q dont la table de codage est la suivante :

| 2B | 1Q |
|---|---|
| 00 | - 3 |
| 01 | - 1 |
| 11 | + 1 |
| 10 | + 3 |

Grâce à des motifs de verrouillage additionnels, la synchronisation des octets dans chacun des canaux est assurée entre un moyen d'émission dans l'un des équipements EA et EC et un moyen de réception dans l'autre équipement. La vitesse de modulation dans la ligne numérique LN est ainsi égale à 80 kbauds, en correspondance avec le débit de 160 kbit/s.

L'invention n'est pas limitée à l'exemple de liaison numérique LN décrite ci-dessus. En effet, comme on le verra dans la suite, les échanges de signaux entre les équipements EC et EA sont indépendants du support et de la technologie de transmission choisie. Par exemple, au lieu d'un codage 2B1Q, les signaux dans la ligne numérique à deux fils LN sont codés selon le code 4B3T, c'est-à-dire selon un codage de quatre bits en trois symboles ternaires ; le support physique de la ligne LN peut comprendre deux fibres optiques au lieu d'une paire symétrique de fils, ou bien encore au moins partiellement une liaison radio bidirectionnelle.

La signalisation numérique supportée par le canal D suivant chacun des sens de transmission de la ligne numérique LN est indépendante de la mise en oeuvre des communications téléphoniques et des services téléphoniques complémentaires fournis au terminal TA par le commutateur CM.

Selon une réalisation préférée, la signalisation numérique est conforme au protocole de signalisation à stimulus selon le projet de norme EN 301 141-1, "Narrowband Multi-service Delivery System (NMDS)", ETSI, janvier 1998. Le protocole NMDS supporté par le canal D est utilisé dans la ligne numérique LN en même temps que des trames RNIS pour l'ensemble des canaux du multiplex à 160 kbit/s. La couche physique 1 et la couche de liaison de données 2 du modèle d'interconnexion ISO pour la ligne numérique sont activées en permanence entre les équipements EC et EA. L'activation permanente de la liaison numérique LN se traduit par l'introduction dans les champs d'adresse des messages de signalisation de la couche réseau 2 du modèle ISO échangés entre les équipements EC et EA, d'un identificateur de point d'accès au service SAPI (Service Access Point Identifer) et d'un identificateur de terminal TEI (Terminal Endpoint Identifer) ayant les états suivants :
- pour une communication analogique à travers les lignes LAC et LTA relative au premier canal B1, les messages contiennent les identificateurs SAPI = 0 et TEI = 126 ;
- pour une communication numérique à travers la ligne LDN et l'équipement EMD relative au deuxième canal B2, les messages contiennent les identificateurs SAPI = 0 et TEI = 125.

Les signaux de signalisation sont conformes au protocole D et peuvent être des messages pour l'établissement d'un appel d'arrivée d'un demandeur éloigné du terminal TA ou d'un appel de départ depuis le terminal TA, tel que des messages d'établissement et d'accusé de réception d'établissement ; des messages d'information avec leurs messages d'accusé de réception relatifs à des début et fin d'impulsion de sonnerie cadencée d'appel, des chiffres de numérotation décimale, des impulsions de taxe, des fermetures ou ouvertures de boucle de courant dans les lignes analogiques LAC et LTA, etc. ; et des messages de déconnexion et de libération d'appel.

L'équipement de central EC a pour rôle essentiel, selon le sens de la voie d'émission VE, de séparer le flux "analogique" dans le canal B1 et le flux numérique dans le canal B2 pour les aiguiller respectivement, vers le commutateur CM et le routeur RO, et selon le sens de la voie de réception VR, de rapprocher le flux analogique du commutateur CM et le flux numérique du routeur RO dans les canaux B1 et B2 pour les réunir dans un support de transmission commun constitué par la ligne numérique d'abonné LN.

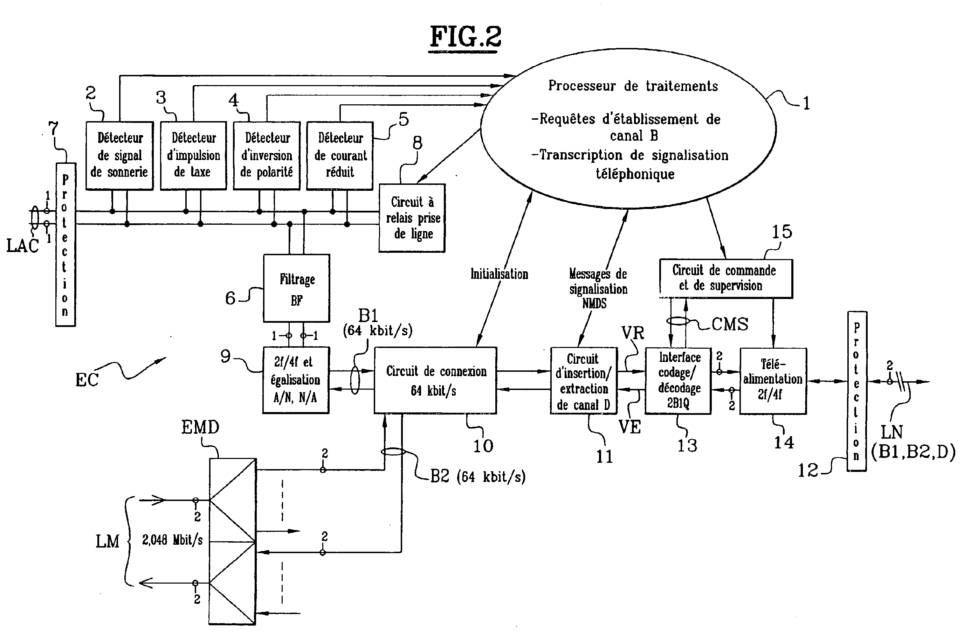

Comme montré à la figure 2, l'équipement de central EC est organisé autour d'un processeur de traitements 1. Au niveau de la couche 3 du modèle ISO, les premiers signaux de signalisation téléphonique transmis par le commutateur CM à travers la ligne analogique LAC sont détectés par des détecteurs 2 à 5 et sont analysés par le processeur 1 qui les retransmet sous forme de premiers messages numériques de signalisation téléphonique dans le canal D de la voie de réception VR dans l'équipement EC. Réciproquement des deuxièmes messages numériques relatifs à la signalisation téléphonique transmise initialement par le terminal TA sont détectés par le processeur 1 dans le canal D de la voie d'émission VE via le circuit 11 dans l'équipement EC pour être retransmis sous forme de deuxièmes signaux analogiques de signalisation téléphonique dans la ligne analogique LAC vers le commutateur CM. Le processeur 1 assure également l'activation permanente de la ligne numérique LN pour les couches 1 et 2 du modèle ISO dans le canal de signalisation D.

Du côté du commutateur téléphonique CM, l'équipement de central EC comprend un détecteur de signal de sonnerie 2, un détecteur d'impulsion de taxe 3, un détecteur d'inversion de polarité 4, un détecteur de courant réduit 5 et un circuit de filtrage bidirectionnel à basse fréquence 6 connectés en parallèle sur la ligne analogique LAC à travers un circuit de protection 7. La ligne analogique LAC est terminée par un circuit à relais de prise de ligne 8 commandé par le processeur 1 afin de simuler dans la ligne analogique LAC des deuxièmes signaux analogiques de signalisation sous la forme de fermetures de boucle en réponse par exemple à des décrochages ou sous la forme d'ouvertures de boucle en réponse par exemple à des raccrochages dans le terminal TA.

Le détecteur de signal de sonnerie 2 détecte tout type de signal de sonnerie cadencée quel que soit le type du commutateur téléphonique CM. Ainsi, le détecteur de sonnerie 2 comprend plusieurs filtres passe-bande ayant des bandes étroites centrées respectivement sur les différentes fréquences de sonnerie des commutateurs téléphoniques actuels, par exemple à 25 Hz, 30 Hz, 50 Hz, 60 Hz et 75 Hz. Le détecteur de sonnerie 2 signale tout début d'une impulsion de sonnerie modulant un courant sinusoïdal à la fréquence déterminée par le commutateur CM et toute fin d'impulsion de sonnerie, quelle que soit la longueur de l'impulsion qui peut être comprise entre 0,7 s et 1,5 s et par conséquent quelle que soit la longueur des intervalles de silence entre les impulsions de sonnerie qui peut être comprise entre 0,7 s et 3,5 s.

Le détecteur d'impulsion de taxe 3 détecte toute impulsion de taxe transmise par le commutateur CM dans la ligne téléphonique LAC en dehors de la bande de fréquence à environ 4 kHz pour les signaux de parole. Le détecteur d'impulsion de taxe 3 est capable de détecter toute impulsion de taxe produite par les commutateurs téléphoniques actuels. A cet égard, le détecteur d'impulsion de taxe 3 comprend des filtres passe-bande ayant des bandes étroites centrées respectivement sur les fréquences de modulation des différentes impulsions de taxe, notamment égales à 12 kHz et 16 kHz.

Le détecteur d'inversion de polarité 4 détecte toute inversion de polarité entre les deux fils de la ligne analogique LAC. En effet, pour certains commutateurs, le décrochage ou le raccrochage du demandeur ou du demandé est signalé par une inversion de polarité dans la ligne d'abonné analogique. La polarité est dite directe ou normale lorsque la ligne analogique n'est pas occupée, et la polarité est dite inversée lorsque la ligne analogique est occupée, entre les phases de décrochage et de raccrochage d'une communication.

Le détecteur de courant réduit 5 compare en permanence la grandeur du courant d'alimentation de la ligne analogique LAG imposé par la batterie d'alimentation dans le central CT à un seuil de courant prédéterminé. Ce seuil correspond à un courant très faible appliqué par le commutateur CM lorsque la ligne LTA est en état de faux appel, et par suite la ligne LAC est également en état de faux appel. Ce faux appel résulte d'un décrochage dans le terminal TA prolongé au-delà d'une longue durée prédéterminée. L'équipement de central EC signale alors par un message de signalisation de courant réduit l'état de courant réduit à l'équipement EA pour qu'il l'applique dans la ligne LTA.

Chacun des détecteurs 2 à 5 échantillonne chaque premier signal analogique de signalisation qu'il surveille le plus rapidement possible, par exemple toutes les 10 ms, et ne valide les changements du signal auprès du processeur 1 qu'après confirmation par un ou deux échantillons supplémentaires pour éviter que la signalisation analogique restituée par l'équipement d'abonné ne respecte pas des gabarits imposés.

Les caractéristiques énoncées ci-dessus des détecteurs 2 à 5 confèrent un caractère universel à l'équipement de centre EC relativement aux commutateurs téléphoniques connus.

Le circuit de filtrage à basse fréquence 6 filtre bidirectionnellement les premiers et deuxièmes signaux analogiques dans la bande d'audiofréquence inférieure à 4 kHz, soit typiquement entre 300 Hz et 3400 kHz. Le circuit de filtrage est relié à un circuit de couplage, d'égalisation et de conversion 9. Ce dernier circuit comprend un coupleur deux fils/quatre fils de manière à découpler de la ligne analogique LAC à deux fils le canal B1 de la voie d'émission à deux fils VE et le canal B1 de la voie de réception à deux fils VR, et des égaliseurs pour les voies VR et VE, le cas échéant complétés par un annuleur d'écho. Le circuit 9 comporte également un convertisseur analogique-numérique à fréquence d'échantillonnage de 8 kHz pour convertir les premiers signaux de parole mais également des signaux de signalisation téléphoniques déterminés, ou tout autre signal analogique transmis dans la bande d'audiofréquence de 4 kHz par le commutateur CM en des premiers signaux numériques convoyés dans le canal B1 à 64 kbit/s de la voie de réception VR, après avoir transmis un signal de signalisation d'établissement à l'équipement d'abonné EA dans la ligne numérique LN. Les signaux de signalisation téléphonique déterminés sont notamment des signaux d'information sur un demandeur distant, une tonalité d'appel, une tonalité d'invitation à numéroter, une tonalité de retour d'appel et une tonalité d'invitation à raccrocher. Un convertisseur numérique-analogique dans le circuit 9 convertit les troisièmes signaux numériques du canal B1 reçus de la voie d'émission VE à travers la ligne numérique LN en des deuxièmes signaux analogiques de parole, ou notamment en des signaux de numérotation à multifréquence, transmis dans la ligne analogique LAC vers le commutateur CM.

Dans l'équipement de central EC, un circuit de connexion bidirectionnel 10 commandé par le processeur 1 connecte à un circuit d'insertion et d'extraction de canal D 11 le circuit 9 attribué au canal B1 et l'accès numérique correspondant de l'équipement de multiplexage et démultiplexage EMD attribué à des deuxièmes et quatrièmes signaux numériques dans le deuxième canal B2.

L'équipement de multiplexage et démultiplexage EDM dessert en fait par des lignes numériques de base bidirectionnelles à 64 kbit/s, 31 équipements de central de l'invention destinés aux deuxièmes canaux B2 dans 31 équipements de central EC de systèmes de raccordement téléphoniques d'abonné selon l'invention dont les premiers canaux B1 sont en relation avec 31 lignes analogiques LAC reliées au commutateur CM. La ligne multiplex LM supporte des trames à 2048 kbit/s selon les normes G703 et G704 de l'UIT. Chaque trame comporte 31 intervalles de temps occupés par les canaux de base B1 à 64 kbit/s et un intervalle de temps occupé notamment par un mot de verrouillage de trame. L'équipement EDM multiplexe ainsi 31 canaux B1 dans la ligne LM pour les transmettre multiplexés à division du temps au routeur RO, et démultiplexe 31 canaux B1 de la ligne LM pour les appliquer aux accès d'entrée correspondant des circuits de connexion 10 inclus dans les 31 équipements de central EC.

Le circuit de connexion 10 réunit octet par octet les premiers signaux numériques dans le canal B1 à 64 kbit/s transmis par le convertisseur analogique-numérique du circuit 6 et les deuxièmes signaux numériques dans le canal B2 à 64 kbit/s transmis par un démultiplexeur dans l'équipement EMD en les multiplexant à division du temps en un signal multiplex intermédiaire à 128 kbit/s selon le sens de la voie de réception VR. Réciproquement, le circuit de connexion 10 sépare les troisièmes et quatrièmes signaux numériques dans les deux canaux B1 et B2 de la voie d'émission VE en les démultiplexant vers le convertisseur numérique-analogique dans le circuit 6 et vers un multiplexeur dans l'équipement EMD.

Sous la commande du processeur 1, le circuit 11 insère des messages de signalisation NMDS dans le canal D à 16 kbit/s pour le multiplexer à division du temps avec les deux canaux B1 et B2 dans la voie de réception VR, et inversement, extrait des messages de signalisation NMDS du canal D multiplexé avec les canaux B1 et B2 dans la voie d'émission VE.

L'équipement de central EC comprend également, entre le circuit d'insertion et d'extraction de canal D 11 et un deuxième circuit de protection 12 relié à la ligne numérique LN, une interface de codage/décodage 13 et un circuit de téléalimentation et de couplage deux fils/quatre fils 14 qui sont associés à un circuit de commande et de supervision 15. L'interface de codage/décodage 13 selon le sens de la voie de réception VR multiplexe les canaux B1, B2 et D avec d'autres canaux, notamment le canal de maintenance et de supervision CMS à 4 kbit/s, fournis par le circuit de commande et de supervision 15 en un signal multiplex à 80 kbauds codé selon le code 2B1Q. Réciproquement, l'interface 13 démultiplexe les deux groupes de canaux dans la voie d'émission VE pour fournir les canaux multiplexés B1, B2 et D au circuit 11 et les autres canaux à 16 kbit/s au circuit de commande et de supervision 15, après un décodage 1Q2B en code binaire.

Le circuit de téléalimentation 14 assure d'une manière classique la téléalimentation de la ligne numérique LN, les équipements EC et EA étant de préférence autonomes, et couple les voies d'émission VE et de réception VR chacune à deux fils avec la ligne numérique bidirectionnelle d'abonné à deux fils LN.

L'équipement d'abonné EA a pour rôle essentiel, selon le sens de la voie d'émission VE, de rapprocher le flux analogique essentiellement de parole produit par le terminal TA à travers la ligne LTA et le flux numérique de données produit par le terminal TN dans les canaux B1 et B2 pour les réunir dans un support de transmission commun constitué par la ligne numérique LN, et selon le sens de la voie de réception VR, de séparer le flux "analogique" et le flux numérique dans les canaux B1 et B2 de la ligne numérique LN pour les aiguiller vers le terminal analogique TA et le terminal numérique d'abonné TN.

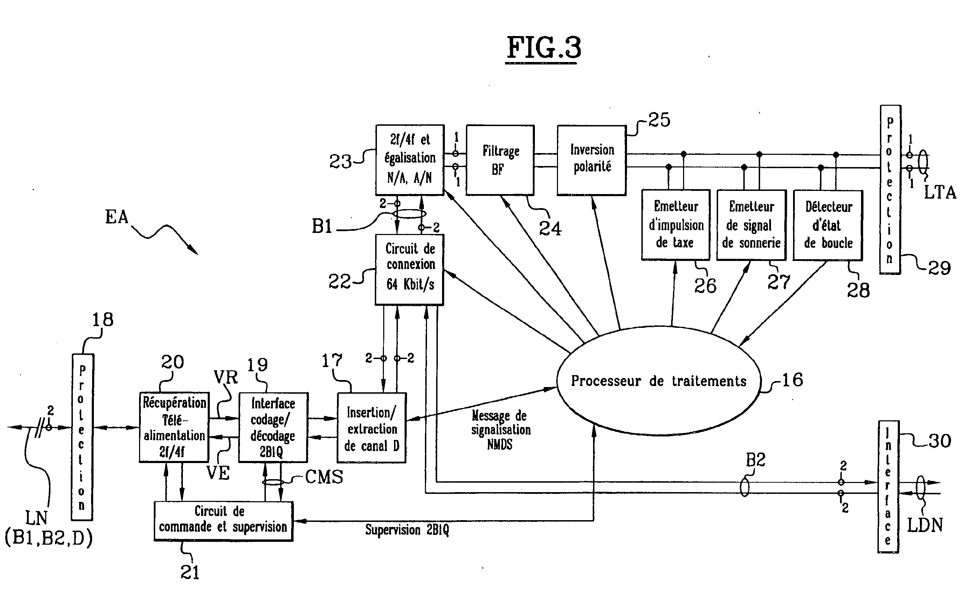

L'équipement d'abonné EA comporte, comme montré à la figure 3, de manière analogue à l'équipement de centre EC un processeur de traitements 16. Le processeur 16 analyse les premiers messages numériques relatifs à la signalisation téléphonique transmise par le commutateur CM via la ligne LN et la voie de réception VR dans l'équipement EA pour les retransmettre sous forme de premiers signaux de signalisation téléphonique dans la ligne analogique LTA vers le terminal TA. Dans la voie d'émission VE de l'équipement EA, le processeur 16 génère des deuxièmes messages numériques de signalisation téléphonique correspondant principalement à des décrochages et raccrochages et éventuellement à des impulsions de numérotation en code décimal établis dans le terminal TA. Le processeur 16 assure également l'activation permanente de la ligne numérique LN pour les couches 1 et 2 du modèle ISO dans le canal de signalisation D.

Du côté de la ligne LN, l'équipement d'abonné EA comporte un circuit d'insertion et d'extraction de canal de signalisation D 17, un circuit de protection 18, une interface de codage/décodage et de couplage deux fils/quatre fils 19, un circuit de récupération de téléalimentation 20 relié à la ligne numérique LN à travers le circuit de protection 18, et un circuit de commande et supervision 21 respectivement analogues aux circuits 11, 12, 13, 14 et 15 et agencés comme ceux-ci.

Un circuit de connexion bidirectionnel 22 est relié par un port de multiplexage/démultiplexage de canaux B au circuit d'insertion et d'extraction de canal D 17, par un port de canal B1 à un circuit de conversion numérique-analogique et analogique-numérique et d'égalisation et de couplage deux fils/quatre fils 23 analogue au circuit 9, et par un port de canal B2 à la ligne de données numérique à 4 fils LDN à travers un circuit de protection 30. Le circuit de connexion 22 sépare octet par octet les premiers et deuxièmes signaux numériques reçus dans les deux canaux B1 et B2 à 64 kbit/s de la voie de réception VR à travers les circuits 18, 20, 19 et 17 et les démultiplexe vers un port relié à un convertisseur numérique-analogique dans le circuit 23 qui convertit les premiers signaux numériques en des premiers signaux analogiques vers le terminal TA, et un port relié à la ligne numérique LDN. Suivant l'autre sens de transmission, le circuit de connexion 22 multiplexe à division du temps avec le canal B2 les deuxièmes signaux numériques dans le canal B1 fournis par conversion de deuxièmes signaux analogiques dans un convertisseur analogique-numérique dans le circuit 23. Les deuxièmes signaux analogiques sont essentiellement de la parole et le cas échéant des chiffres de numérotation en code multifréquence transmis par le terminal TA. Le canal B2 supporte des quatrièmes signaux numériques de données transmis dans la ligne LDN par le terminal TN, et est multiplexé avec le canal B1 en un signal multiplex intermédiaire à 128 kbit/s vers la voie d'émission VE.

Le circuit 23 est relié à l'extrémité de la ligne analogique d'abonné LA1 à travers un circuit de filtrage à basse fréquence 24 et un circuit d'inversion de polarité 25. Le circuit de filtrage 24, comme le circuit 6, filtre bidirectionnellement dans la bande d'audiofréquence inférieure à 4 kHz. Le circuit 25 impose toute inversion de polarité entre les deux fils de la ligne LTA en réponse à un message de signalisation signalant une inversion de polarité détectée par le détecteur 4. Les circuits 24 et 25 correspondent aux circuits 6 et 4 dans l'équipement EC. L'équipement d'abonné EA comporte également un émetteur d'impulsion de taxe 26 et un émetteur de signal de sonnerie et de tonalité 27 de manière à reproduire des impulsions de taxe et des impulsions de sonnerie cadencée dans la ligne LA1 en réponse à celles détectées par les détecteurs 2 et 3 dans l'équipement EC, et un détecteur d'état de boucle 28 pour signaler une fermeture de boucle ou une ouverture de boucle dans la ligne d'abonné TA en réponse à un décrochage ou un raccrochage dans le terminal TA, ou bien des couples d'ouverture de boucle et de fermeture de boucle dans la ligne LA1 correspondant à un chiffre de numérotation décimale, sous la forme de messages de signalisation respectif dans le canal D de la voie d'émission VE. Des ports du circuit d'inversion de polarité 25, des émetteurs 26 et 27 et du détecteur 28 sont reliés à une extrémité de la ligne analogique LTA à travers un circuit de protection 29.

Selon une deuxième réalisation, le multiplexage statique des signaux analogiques dans la ligne téléphonique analogique LTA et des signaux numériques dans la ligne de données numériques LDN est remplacé par un multiplexage dynamique. La bande passante de la liaison numérique LN est ainsi allouée dynamiquement en fonction du trafic entre le routeur RO du réseau numérique à haut débit NET et le terminal numérique TN. Les allocations des canaux B1 et B2 peuvent être différentes dans les voies d'émission et les voies de réception. Par exemple, lorsque l'abonné souhaite enregistrer dans son micro-ordinateur TN des fichiers transmis à travers le routeur RO, seulement le canal B2 dans la voie d'émission VE est occupé pour requérir ce transfert de fichier, tandis que les deux canaux B1 et B2 dans la voie de réception VR sont occupés par les données des fichiers transférés. L'affectation du premier canal B1 à une communication de données entre le terminal numérique TN et le routeur RO est réalisée par l'intermédiaire d'un message d'établissement du canal B1 émis par l'un des équipements EAa et ECa ayant reçu une demande d'augmentation du débit du trafic du terminal TA ou du routeur RO, et d'un accusé de réception sous la forme d'un message de connexion émis par l'autre équipement afin d'établir au moins la liaison unidirectionnelle souhaitée B1+B2 dans la liaison numérique ECa-LN-EAa.

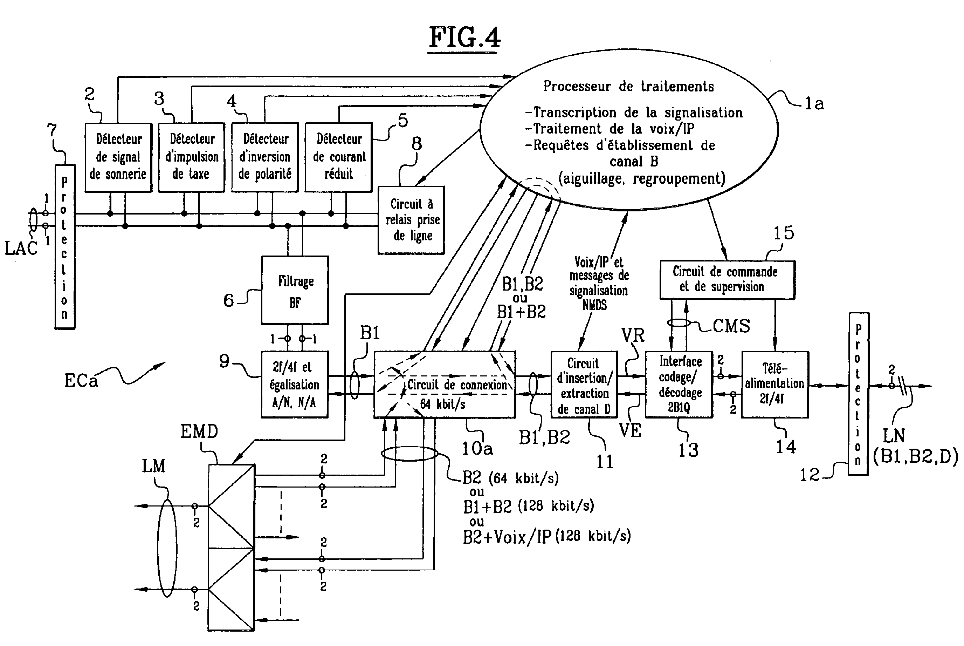

Pour cette deuxième réalisation, l'équipement de central ECa est quelque peu modifié au niveau du circuit de connexion 10a et du processeur de traitements 1a, comme montré à la figure 4. Du côté de l'accès au réseau numérique à haut débit NET, le circuit de connexion 10a est relié par deux lignes numériques bidirectionnelles chacune à deux paires de fils à l'équipement de multiplexage et démultiplexage EMD. En fonction du trafic de données imposé par le routeur RO et signalé par l'équipement EMD au processeur la et en fonction du trafic imposé par le terminal TN et signalé dans le canal D extrait de la voie d'émission VE au processeur la puis à l'équipement EMD, le processeur la alloue un canal B2 ou deux canaux B2 et B1 pour l'un et/ou l'autre des sens de transmission. L'accès numérique entre l'équipement EMD et le circuit de connexion 10 est ainsi à 64 kbit/s ou à 128 kbit/s.

Le processeur de traitements la analyse les messages de signalisation téléphonique dans le canal D de la voie d'émission VE et génère des messages de signalisation téléphonique dans le canal D de la voie de réception VR, comme le processeur de traitements 1. En plus, le processeur la alloue dynamiquement des canaux B1 et B2 en fonction du trafic demandé par l'équipement de multiplexage et démultiplexage EMD pour la voie de réception VR et en fonction du trafic demandé par le terminal numérique TN signalé dans le canal D de la voie d'émission VE. Pour mettre en oeuvre l'allocation dynamique, les quatre protocoles suivants sont implantés dans le processeur de traitements la qui est en négociation pour cette allocation dynamique avec le terminal numérique TN par l'intermédiaire des canaux D :
1) Protocole multiliaison point-à-point MLPPP (Multi Link Point-to-Point Protocol) pour indiquer au terminal numérique TN que le processeur de traitement la a l'intention d'associer en une seule liaison logique les canaux B1 et B2 ou bien encore le canal B1 et le canal D, ou bien encore les trois canaux B1, B2 et D. Les données en provenance des couches hautes du modèle ISO sont transmises sur la liaison logique multicanal EC-LN-EA par fragmentation des données reçues depuis l'équipement de multiplexage démultiplexage EMD ou du terminal numérique TN, puis par réassemblage des fragments de données en une trame reconstituée à l'autre extrémité de la liaison;
2) Protocole de demande de largeur de bande BOD (PPP - Bandwith on Demand) pour surveiller le trafic instantané dans chacun des canaux B1, B2 et D afin que le processeur la décide en fonction du trafic surveillé d'associer au moins deux canaux à une communication par l'intermédiaire du protocole MLPPP
3) Protocole de contrôle d'allocation de largeur de bande BACP (PPP - Bandwith Allocation Control Protocol) pour associer un discriminateur unique aux différentes liaisons logiques qui constituent l'ensemble multicanal comprenant les canaux B1, B2 et D ;
4) Protocole d'allocation de largeur de bande BAP (PPP - Bandwith Allocation Protocol) pour exploiter les décisions déduites de l'analyse avec le protocole BOD et afin que le processeur la de l'équipement de central EC négocie avec le terminal numérique TN l'adjonction conditionnelle ou la suppression d'une liaison logique ou d'un canal en s'appuyant sur le ou les discriminateurs selon le protocole BACP.

Afin d'analyser le trafic dans les canaux B1 et B2 aussi bien dans la voie d'émission que dans la voie de réception VR, les signaux multiplex intermédiaires B1+B2 sont appliqués au processeur la à travers le circuit de connexion 10a.

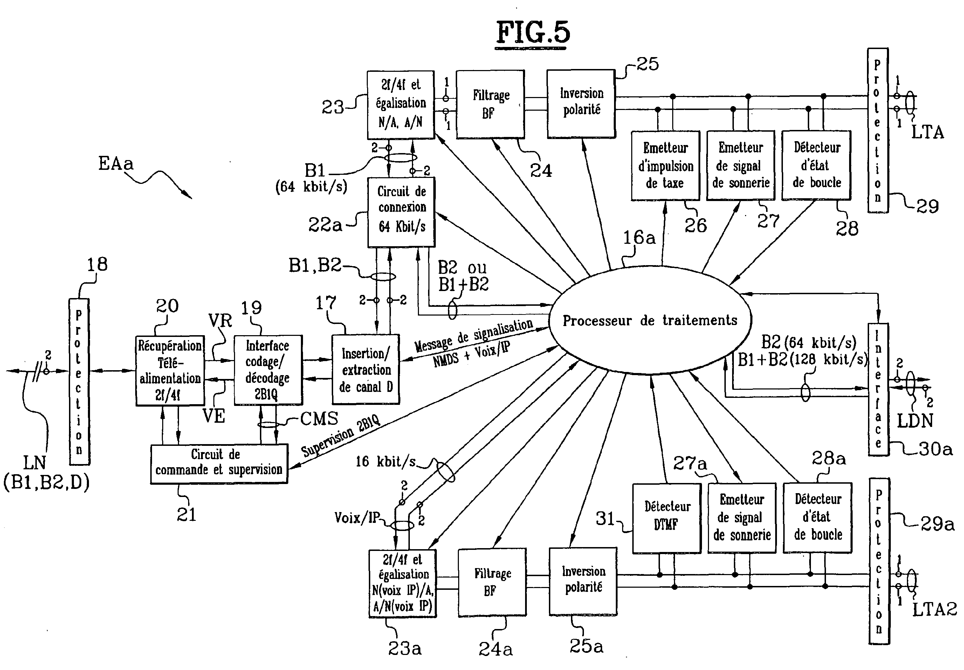

Dans l'équipement d'abonné EAa selon cette deuxième réalisation montrée à la figure 5, le processeur de traitements 16a est interconnecté entre l'accès numérique du circuit de connexion 22a desservant le terminal numérique TN et l'interface 30a reliée à la ligne de données numériques LDN. Le processeur 16a, comme le processeur la dans l'équipement de central ECa, assure la fragmentation des données entre les canaux B1 et B2 suivant le sens de la voie d'émission VE et le regroupement des données des canaux B1 et B2 suivant le sens de la voie de réception VR en fonction de signalisation transmise par le terminal TN ou par le canal D de la voie de réception VR. L'agencement des autres circuits 17 à 29 montré à la figure 3 demeure dans la deuxième réalisation montré à la figure 5.

Bien que l'équipement d'abonné EAa pourrait assurer la négociation des canaux alloués avec son homologue, l'équipement de central ECa, les protocoles précités MLPPP, BOD, BACP et BAP sont de préférence implantés dans le terminal numérique TN afin de diminuer le coût de l'équipement d'abonné EAa.

Selon une troisième réalisation montrée particulièrement à la figure 5, l'équipement d'abonné Ea comporte un accès téléphonique analogique supplémentaire relié par une deuxième ligne téléphonique analogique LTA2. Cette ligne LTA2 est typiquement reliée à une carte téléphonique incluse dans le micro-ordinateur TN(PC) afin que la voix de l'abonné devant son micro-ordinateur formant des troisièmes signaux analogiques soit transmise selon le protocole de réseau IP (Internet Protocol) du réseau à haut débit NET dans le canal D de la voie d'émission VE, et inversement de la voix transmise selon le protocole de réseau IP dans le canal D de la voie de réception VR soit reçue après conversion, en tant que quatrièmes signaux analogiques, dans le micro-ordinateur, en se fondant sur les protocoles Q921 et I430 de l'UIT.

Comme cela apparaît dans la figure 5, du côté de la deuxième ligne téléphonique analogique LTA2, l'équipement d'abonné EAa comprend un circuit de conversion de troisièmes signaux analogiques en messages de données IP et de messages de données IP en quatrièmes signaux analogiques et d'égalisation et de couplage 2 fils/4 fils 23a, un circuit de filtrage à basse fréquence 24a, un circuit d'inversion de polarité 25a, un émetteur de signal de sonnerie et de tonalité 27a, un détecteur d'état de boucle 28a et un circuit de protection 29a qui sont respectivement agencés de la même manière que les circuits 23, 24, 25, 27, 28 et 29 à l'extrémité de la première ligne téléphonique analogique LTA. En outre, un détecteur de chiffre de numéro d'appel en code à multifréquence DTMF (Dual-Tone Multifrequency) 31 détecte des signaux à bifréquence transmis par la ligne téléphonique LTA2 et correspondant à des chiffres d'un numéro d'appel de demandé. Le circuit 23a intègre également le protocole de réseau IP de manière à convertir les troisièmes signaux analogiques de voix reçus de la ligne LTA2 en des messages numériques de données selon les datagrammes IP avec un débit inférieur à 16 kbit/s.

Dans le processeur 16a est également implanté le protocole de réseau IP avec le protocole de transport TCP (Transmission Control Protocol) afin que les signaux de signalisation détectés dans la ligne LTA2 par les détecteurs 28a et 31 soient convertis en des messages numériques de signalisation selon le protocole de réseau IP et soient transmis, comme les messages de données selon le protocole IP délivrés par le circuit 23a, dans le canal de signalisation D à 16 kbit/s supportant également les deuxièmes messages de signalisation téléphonique en relation avec le détecteur 28. Dans le circuit 17, le canal de signalisation D supportant ces trois types de messages entrelacés est multiplexé avec le canal de données B1 supportant les troisièmes signaux numériques relatifs au terminal TA et le canal de données B2 supportant les quatrièmes signaux numériques transmis par le terminal TN.

Le circuit 23a est également relié au processeur de traitement 16a afin que celui-ci gère dynamiquement les différentes liaisons de données relatives aux données du terminal TN via la ligne LDN, la voix analogique du terminal TA via la ligne LTA et la voix du terminal TN via la ligne LTA2 entrelacées avec les signalisations téléphoniques. Au niveau de la couche 2 du modèle ISO, les liaisons de données relatives aux messages selon le protocole IP et aux messages de signalisation téléphonique relatifs au terminal TA sont différenciées particulièrement dans les champs d'adresse SAPI et TEI des trames de données.

En cas de débordement dans le canal D, la signalisation téléphonique provenant de la ligne téléphonique analogique LTA est prioritaire par rapport à la voix et à la signalisation téléphonique provenant de la ligne téléphonique analogique LTA2.

Selon l'autre sens de transmission, le circuit 17 extrait le canal de signalisation D reçu de la ligne numérique d'abonné LN afin que le processeur 16a sépare le cas échéant les messages de signalisation téléphoniques destinés aux circuits 25, 26 et 27 relatifs au terminal analogique TA et les messages de signalisation selon le protocole de réseau IP destinés aux circuits 25a et 27a relatifs au terminal numérique TN, et les messages de données selon le protocole de réseau IP destinés au circuit 23a. Le circuit 23a convertit les messages de données reçus selon le protocole IP en des quatrièmes signaux analogiques de voix transmis au terminal numérique TN. Les messages de signalisation téléphonique reçus selon le protocole IP sont convertis en des commandes des circuits 25a et 27a afin que ces derniers transmettent des signaux de téléphonie à la carte téléphonique du terminal TN.

Dans l'équipement de central ECa (figure 4), les messages de données et de signalisation téléphonique selon le protocole de réseau IP sont extraits du canal D reçu de la ligne numérique d'abonné LN afin que le processeur la traite l'aiguillage des messages IP, comme le canal B2, à travers le circuit de connexion 10a. Les deux accès numériques bidirectionnels à 64 kbit/s reliés à l'équipement de multiplexage et démultiplexage EMD sont respectivement alloués, selon cette troisième réalisation, au canal de données B2 et aux messages de signalisation de données et de signalisation téléphonique selon le protocole IP. Le canal B1 pour les données téléphoniques transite via le circuit 9, comme selon la première réalisation.

Suivant l'autre sens de transmission, le circuit de connexion 10a aiguille vers le processeur la et extrait des messages de signalisation de données et de signalisation téléphonique selon le protocole de réseau IP transmis dans un intervalle de temps de chaque trame dans la ligne multiplex LM par le routeur RO, puis dans l'un des deux canaux à 64 kbit/s fournis par l'équipement EMD. Le processeur la insère ces messages dans le canal de signalisation D qui est multiplexé avec les canaux B1 et B2 de la voie de réception VR dans le circuit 110.

## Revendications

1. - Système de raccordement entre une installation téléphonique d'abonné incluant un terminal analogique (TA) et un terminal numérique (TN) d'une part, et un commutateur téléphonique analogique (CM) et un noeud d'accès (RO) d'un réseau numérique à haut débit (NET), d'autre part, **caractérisé en ce qu'**il comprend :
- un premier équipement (EC) comprenant un moyen (9) pour convertir des premiers signaux analogiques (LAC) transmis par le commutateur (CM) en des premiers signaux numériques (B1), un moyen (1, 10) pour regrouper les premiers signaux numériques et des deuxièmes signaux numériques (B2) transmis par le noeud (RO) et destinés au terminal numérique (TN) en deux canaux numériques multiplexés (B1, B2) transmis dans une ligne téléphonique d'abonné (LN) vers les terminaux, un moyen (1, 10) pour séparer deux canaux numériques multiplexés (B1, B2) de la ligne téléphonique (LN) en des troisièmes signaux numériques (B1) relatifs à des signaux du terminal analogique (TA) et des quatrièmes signaux numériques (B2) qui sont relatifs à des données du terminal numérique (TN) et qui sont transmis vers ledit noeud (RO), et un moyen (9) pour convertir les troisièmes signaux numériques en des deuxièmes signaux analogiques (LAC) transmis au commutateur ; et
- un deuxième équipement (EA) comprenant un moyen (16, 22) pour séparer les canaux numériques multiplexés (B1, B2) transmis via la ligne téléphonique (LN) en les premiers signaux numériques (LTA) et les deuxièmes signaux numériques (LDN) transmis au terminal numérique (TN), un moyen (23) pour convertir les premiers signaux numériques séparés (B1) en les premiers signaux analogiques (LTA) qui sont transmis au terminal analogique (TA), un moyen (23) pour convertir des deuxièmes signaux analogiques (LTA) provenant du terminal analogique (TA) en des troisièmes signaux numériques (B1), et un moyen (1, 22) pour regrouper les troisièmes signaux numériques précités et des quatrièmes signaux numériques transmis par le terminal numérique (TN) en deux canaux numériques multiplexés (B1, B2) transmis dans la ligne téléphonique d'abonné (LN).

2. - Système conforme à la revendication 1, comprenant un troisième équipement numérique (EMD) commun à plusieurs premiers équipements (EC) pour démultiplexer un signal multiplex (LM) transmis par le noeud (RO) en plusieurs deuxièmes signaux numériques (B2) respectivement appliqués aux moyens pour regrouper (1, 10) inclus dans lesdits plusieurs premiers équipements, et pour multiplexer plusieurs quatrièmes signaux numériques (B2) respectivement fournis par les moyens pour séparer (1, 10) inclus dans lesdits premiers équipements en un signal multiplex (LM) transmis au noeud (RO).

3. - Système conforme à la revendication 1 ou 2, dans lequel le premier équipement (EC) comprend en outre des moyens (2-5) pour détecter des premiers signaux de signalisation téléphonique analogiques transmis par le commutateur (CM) et un moyen (1, 11) pour insérer des premiers messages numériques de signalisation téléphonique dans un canal de signalisation (D) respectivement en réponse aux premiers signaux de signalisation détectés afin de multiplexer les deux canaux numériques (B1, B2) avec le canal de signalisation (D) pour les transmettre dans la ligne téléphonique d'abonné (LN) vers le deuxième équipement, un moyen (1, 11) pour extraire et analyser des deuxièmes messages de signalisation du canal de signalisation reçus de la ligne téléphonique et des moyens (1, 8) pour transmettre les deuxièmes signaux analogiques de signalisation au commutateur (CM) respectivement en réponse aux deuxièmes messages de signalisation analysés.

4. - Système conforme à l'une quelconque des revendications 1 à 3, dans lequel le deuxième équipement (EA) comprend en outre un moyen (17, 16) pour extraire et analyser les premiers messages de signalisation du canal de signalisation reçus de la ligne téléphonique, des moyens (16, 25-27) pour transmettre les premiers signaux analogiques de signalisation au terminal analogique (TA) respectivement en réponse aux premiers messages de signalisation analysés, des moyens (16, 28) pour détecter des deuxièmes signaux de signalisation téléphonique analogiques transmis par le terminal analogique (TA), et un moyen (16, 17) pour insérer des deuxièmes messages numériques de signalisation téléphonique dans le canal de signalisation (D) respectivement en réponse aux deuxièmes signaux de signalisation détectés afin de multiplexer les deux canaux numériques (B1, B2) avec le canal de signalisation (D) pour les transmettre dans la ligne téléphonique d'abonné (LN) vers le premier équipement (EC).

5. - Système conforme à l'une quelconque des revendications 1 à 4, dans lequel le premier équipement (ECa) et l'un des deuxième équipement (EAa) et terminal numérique (TN) comprennent des moyens (1a, 10a, 11a ; 22a, 16a ou TN) pour allouer dynamiquement l'un des ou les deux canaux numériques (B1, B2) suivant l'un et/ou l'autre des sens de transmission (VE, VR) de la ligne téléphonique d'abonné (LN) à une communication de données entre le noeud (RO) et le terminal numérique (TN) en fonction des trafics de données demandés par l'un et/ou l'autre des noeud et terminal numérique.

6. - Système conforme à l'une quelconque des revendications 1 à 5, dans lequel le deuxième équipement (EAa) comprend en outre un moyen (23a) pour convertir des troisièmes signaux analogiques notamment de voix (LTA2) provenant du terminal numérique (TN) en des messages numériques de données selon un protocole de réseau du réseau à haut débit (NET), des moyens (16a, 28a, 31) pour détecter des troisièmes signaux de signalisation téléphonique transmis par le terminal numérique (TN) afin de les convertir en des messages numériques de signalisation selon le protocole de réseau, un moyen (16a, 17, 22a) pour insérer les messages de données et de signalisation selon le protocole de réseau dans un canal de signalisation (D) afin de les multiplexer avec les deux canaux numériques (B1, B2) dans la ligne téléphonique d'abonné vers le premier équipement (ECa), un moyen (16a, 17, 22a) pour extraire et analyser des messages numériques de données et de signalisation selon le protocole de réseau du canal de signalisation (D) reçus de la ligne téléphonique, un moyen (23a) pour convertir les messages numériques de données selon le protocole de réseau extraits en des quatrièmes signaux analogiques notamment de voix (LTA2) transmis au terminal numérique (TN), et des moyens (16a, 25a, 27a) pour transmettre des quatrièmes signaux de signalisation téléphonique au terminal numérique en réponse aux messages de signalisation extraits selon le protocole de réseau.

7. - Système conforme à l'une quelconque des revendications 1 à 6, dans lequel le premier équipement (ECa) comprend en outre un moyen (11a, 1a, 10a) pour extraire et analyser des messages numériques de données et de signalisation selon le protocole de réseau du canal de signalisation (D) reçus de la ligne téléphonique afin de les transmettre, en tant que quatrièmes signaux numériques, vers ledit noeud (RO), et un moyen (10a, 1a, 11a) pour insérer des messages de données et de signalisation selon le protocole de réseau transmis par le noeud (RO) dans le canal de signalisation (D) afin de le multiplexer avec les deux canaux numériques (B1, B2) pour les transmettre dans la ligne téléphonique d'abonné (LN) vers le deuxième équipement (EAa).

8. - Système conforme à l'une quelconque des revendications 1 à 7, dans lequel la ligne téléphonique d'abonné est une ligne à deux fils (LN) qui convoie pour chaque sens de transmission au moins les deux canaux numériques multiplexés (B1, B2) avec un canal de signalisation (D) supportant des messages de signalisation.

## Claims

1. Connecting system between a subscriber telephone apparatus including an analogue terminal (TA) and a digital terminal (TN), on the one hand, and an analogue telephone exchange (CM) and an access node (RO) of a high flow-rate digital network (NET), on the other hand, **characterised in that** it comprises:
- a first apparatus (EC) comprising means (9) for converting the first analogue signals (LAC) transmitted by the exchange (CM) into first digital signals (B1), means (1, 10) for collecting the first digital signals and second digital signals (B2) transmitted by the node (RO) and intended for the digital terminal (TN) into two multiplexed digital channels (B1, B2) transmitted along a subscriber telephone line (LN) towards the terminals, means (1, 10) for separating two multiplexed digital channels (B1, B2) of the telephone line (LN) into third digital signals (B1) relating to signals from the analogue terminal (TA) and fourth digital signals (B2) which relate to data of the digital terminal (TN) and which are transmitted to said node (RO), and means (9) for converting the third digital signals into second analogue signals (LAC) transmitted to the exchange; and
a second apparatus (EA) comprising means (16, 22) for separating the multiplexed digital channels (B1, B2) transmitted through the telephone line (LN) into the first digital signals (LTA) and the second digital signals (LDN) transmitted to the digital terminal (TN), means (23) for converting the first digital signals separated (B1) into the first analogue signals (LTA) which are transmitted to the analogue terminal (TA), means (23) for converting the second analogue signals (LTA) coming from the analogue terminal (TA) into third digital signals (B1), and means (1, 22) for collecting the above-mentioned third digital signals and fourth digital signals transmitted by the digital terminal (TN) into two multiplexed digital channels (B1, B2) transmitted along the subscriber telephone line (LN).

2. System according to claim 1, comprising a third digital apparatus (EMD) common to a plurality of first apparatuses (EC) for demultiplexing a multiplex signal (LM) transmitted by the node (RO) into a plurality of second digital signals (B2) applied respectively to the collecting means (1, 10) included in said plurality of first apparatuses, and for multiplexing a plurality of fourth digital signals (B2) supplied respectively by the separating means (1, 10) included in said first apparatuses into a multiplex signal (LM) transmitted to the node (RO).

3. System according to claim 1 or 2, wherein the first apparatus (EC) further comprises means (2-5) for detecting first analogue telephone signalling signals transmitted by the exchange (CM) and means (1, 11) for inserting first digital telephone signalling messages in a signalling channel (D) respectively in response to the first signalling signals detected in order to multiplex the two digital channels (B1, B2) with the signalling channel (D) so as to transmit them along the subscriber telephone line (LN) towards the second apparatus, means (1, 11) for extracting and analysing the second signalling messages from the signalling channel received from the telephone line and means (1, 8) for transmitting the second analogue signalling signals to the exchange (CM), respectively, in response to the second signalling messages analysed.

4. System according to any one of claims 1 to 3, wherein the second apparatus (EA) further comprises means (17, 16) for extracting and analysing the first signalling messages from the signalling channel received from the telephone line, means (16, 25-27) for transmitting the first analogue signalling signals to the analogue terminal (TA), respectively, in response to the first signalling messages analysed, means (16, 28) for detecting second analogue telephone signalling signals transmitted by the analogue terminal (TA), and means (16, 17) for inserting second digital telephone signalling messages into the signalling channel (D), respectively, in response to the second signalling signals detected, in order to multiplex the two digital channels (B1, B2) with the signalling channel (D) so as to transmit them along the subscribed telephone line (LN) to the first apparatus (EC).

5. System according to any one of claims 1 to 4, wherein the first apparatus (ECa) and either the second apparatus (EAa) or the digital terminal (TN) comprise means (1a, 10a, 11a; 22a, 16a or TN) for dynamically allocating one or both of the two digital channels (B1, B2) in one and/or the other direction of transmission (VE, VR) of the subscriber telephone line (LN) to a communication of data between the node (RO) and the digital terminal (TN) as a function of the data traffic demanded by one and/or the other of the node and the digital terminal.

6. System according to any one of claims 1 to 5, wherein the second apparatus (EAa) further comprises means (23a) for converting the third analogue signals, notably voice signals (LTA2) coming from the digital terminal (TN), into digital data messages according to network protocol of the high flow-rate network (NET), means (16a, 28a, 31) for detecting the third telephone signalling signals transmitted by the digital terminal (TN) in order to convert them into digital signalling messages according to the network protocol, means (16a, 17, 22a) for inserting data and signalling messages according to the network protocol into a signalling channel (D) in order to multiplex them with the two digital channels (B1, B2) in the subscriber telephone line towards the first apparatus (ECa), means (16a, 17, 22a) for extracting and analysing the digital data and signalling messages according to the network protocol of the signalling channel (D) received from the telephone line, means (23a) for converting the digital data messages extracted according to the network protocol into fourth analogue signals, notably voice signals (LTA2), transmitted to the digital terminal (TN), and means (16a, 25a, 27a) for transmitting fourth telephone signalling signals to the digital terminal in response to the signalling messages extracted according to the network protocol.

7. System according to any one of claims 1 to 6, wherein the first apparatus (ECa) further comprises means (11 a, 1a, 10a) for extracting and analysing digital data and signalling messages according to the network protocol from the signalling channel (D) received from the telephone line, in order to transmit them, as fourth digital signals, to said node (RO), and means (10a, 1a, 11a) for inserting data and signalling messages according to the network protocol transmitted by the node (RO) into the signalling channel (D) in order to multiplex it with the two digital channels (B1, B2) so as to transmit them along the subscriber telephone line (LN) to the second apparatus (EAa).

8. System according to any one of claims 1 to 7, wherein the subscriber telephone line is a two-wire line (LN) which carries, in each direction of transmission, at least the two multiplexed digital channels (B1, B2) with a signalling channel (D) supporting signalling messages.

## Patentansprüche

1. - Verbindungssystem zwischen einer Teilnehmer-Telefonanlage mit einem analogen Endgerät (TA) und einem digitalen Endgerät (TN) einerseits und einem analogen Telefonhauptverteiler (CM) und einem Zugangsknoten (RO) eines digitalen Hochgeschwindigkeitsnetzes (NET) andererseits, **dadurch gekennzeichnet, dass** es Folgendes umfasst:
- eine erste Ausrüstung (EC), bestehend aus einem Mittel (9) zur Umwandlung der vom Hauptverteiler (CM) übertragenen ersten analogen Signale (LAC) in erste digitale Signale (B1), einem Mittel (1, 10) zur Bündelung der ersten digitalen Signale und zweiten digitalen Signale (B2), die vom Knoten (RO) übertragen werden und für das digitale Endgerät (TN) bestimmt sind, in zwei digitalen Multiplex-Kanälen (B1, B2), die über eine Teilnehmer-Telefonleitung (LN) zu den Endgeräten übertragen werden, einem Mittel (1, 10) zum Trennen der beiden digitalen Multiplex-Kanäle (B1, B2) der Telefonleitung (LN) in dritte digitale Signale (B1) betreffend Signale des analogen Endgerätes (TA) und vierte digitale Signale (B2) betreffend Daten des digitalen Endgerätes (TN), die zum Knoten (RO) übertragen werden, und einem Mittel (9) zur Umwandlung der dritten digitalen Signale in zweite analoge Signale (LAC), die zum Hauptverteiler übertragen werden; und
- eine zweite Ausrüstung (EA), bestehend aus einem Mittel (16, 22) zum Trennen der über die Telefonleitung (LN) übertragenen digitalen Multiplex-Kanäle (B1, B2) in die ersten digitalen Signale (LTA) und die zweiten digitalen Signale (LDN), die zum digitalen Endgerät (TN) übertragen werden, einem Mittel (23) zur Umwandlung der abgetrennten ersten digitalen Signale (B1) in die ersten analogen Signale (LTA), die zum analogen Endgerät (TA) übertragen werden, einem Mittel (23) zur Umwandlung der vom analogen Endgerät (TA) kommenden zweiten analogen Signale (LTA) in dritte digitale Signale (B1) und einem Mittel (1, 22) zur Bündelung der vorstehend genannten dritten digitalen Signale und vom digitalen Endgerät (TN) übertragenen vierten digitalen Signale in zwei digitalen Multiplex-Kanälen (B1, B2), die in die Teilnehmer-Telefonleitung (LN) übertragen werden.

2. - System nach Anspruch 1, bestehend aus einer dritten digitalen Ausrüstung (EMD), die den beiden ersten Ausrüstungen (EC) gemeinsam ist, zum Demultiplexen eines vom Knoten (RO) übertragenen Multiplex-Signals (LM) in mehrere zweite digitale Signale (B2), die jeweils an die zu den mehreren ersten Ausrüstungen zählenden Mittel zur Bündelung (1, 10) angelegt werden, und zum Multiplexen mehrerer vierter digitaler Signale (B2), die jeweils von den zu den ersten Ausrüstungen zählenden Mitteln zum Trennen (1, 10) geliefert werden, in einem Multiplex-Signal (LM), das zum Knoten (RO) übertragen wird.

3. - System nach Anspruch 1 oder 2, bei dem die erste Ausrüstung (EC) zudem Folgendes umfasst: Mittel (2-5) zur Erfassung erster analoger telefonischer Signalisierungssignale, die vom Hauptverteiler (CM) übertragen werden, ein Mittel (1, 11) zum Einfügen erster digitaler telefonischer Signalisierungsnachrichten in einen Signalisierungskanal (D), jeweils als Reaktion auf die ersten erfassten Signalisierungssignale, mit dem Ziel des Multiplexens der beiden digitalen Kanäle (B1, B2) mit dem Signalisierungskanal (D), um sie in der Teilnehmer-Telefonleitung (LN) zur zweiten Ausrüstung zu übertragen, ein Mittel (1, 11) zum Extrahieren und Auswerten von über die Telefonleitung empfangenen zweiten Signalisierungsnachrichten des Signalisierungskanals und Mittel (1, 8) zur Übertragung der zweiten analogen Signalisierungssignale zum Hauptverteiler (CM), jeweils als Reaktion auf die ausgewerteten zweiten Signalisierungsnachrichten.

4. - System nach einem beliebigen der Ansprüche 1 bis 3, bei dem die zweite Ausrüstung (EA) zudem Folgendes umfasst: ein Mittel (17, 16) zum Extrahieren und Auswerten der über die Telefonleitung empfangenen ersten Signalisierungsnachrichten des Signalisierungskanals, Mittel (16, 25-27) zur Übertragung der ersten analogen Signalisierungssignale zum analogen Endgerät (TA), jeweils als Reaktion auf die ausgewerteten ersten Signalisierungsnachrichten, Mittel (16, 28) zur Erfassung der zweiten analogen telefonischen Signalisierungssignale, die vom analogen Endgerät (TA) übertragen werden, und ein Mittel (16, 17) zum Einfügen zweiter digitaler telefonischer Signalisierungsnachrichten in den Signalisierungskanal (D), jeweils als Reaktion auf die erfassten zweiten Signalisierungssignale, mit dem Ziel des Multiplexens der beiden digitalen Kanäle (B1, B2) mit dem Signalisierungskanal (D), um sie über die Teilnehmer-Telefonleitung (LN) zur ersten Ausrüstung (EC) zu übertragen.

5. - System nach einem beliebigen der Ansprüche 1 bis 4, bei dem die erste Ausrüstung (ECa) und die zweite Ausrüstung (EAa) oder aber das digitale Endgerät (TN) Folgendes umfassen: Mittel (1a, 10a, 11a; 22a, 16a oder TN) zur dynamischen Zuweisung eines der beiden digitalen Kanäle (B1, B2) oder beider in einer und/oder der anderen der Übertragungsrichtungen (VE, VR) der Teilnehmer-Telefonleitung (LN) zur Datenübertragung zwischen dem Knoten (RO) und dem digitalen Endgerät (TN) in Abhängigkeit von den Datenverkehren, die vom Knoten und/oder dem digitalen Endgerät verlangt werden.

6. - System nach einem beliebigen der Ansprüche 1 bis 5, bei dem die zweite Ausrüstung (EAa) zudem Folgendes umfasst: ein Mittel (23a) zur Umwandlung von dritten analogen Signalen, insbesondere von Sprachsignalen (LTA2), die vom digitalen Endgerät (TN) kommen, in digitale Datennachrichten nach einem Netzprotokoll des Hochgeschwindigkeitsnetzes (NET), Mittel (16a, 28a, 31) zur Erfassung vom digitalen Endgerät (TN) übertragener dritter telefonischer Signalisierungssignale, um sie in digitale Signalisierungsnachrichten nach dem Netzprotokoll umzuwandeln, ein Mittel (16a, 17, 22a) zum Einfügen der Daten- und Signalisierungsnachrichten nach dem Netzprotokoll in einen Signalisierungskanal (D), um ihn mit den beiden digitalen Kanälen (B1, B2) in der Teilnehmer-Telefonleitung zur ersten Ausrüstung (ECa) hin zu multiplexen, ein Mittel (16a, 17, 22a) zum Extrahieren und Auswerten der über die Telefonleitung empfangenen digitalen Daten- und Signalisierungsnachrichten nach dem Netzprotokoll des Signalisierungskanals (D), ein Mittel (23a) zur Umwandlung der extrahierten digitalen Datennachrichten nach dem Netzprotokoll in vierte analoge Signale, insbesondere Sprachsignale (LTA2), die zum digitalen Endgerät (TN) übertragen werden, und Mittel (16a, 25a, 27a) zur Übertragung vierter telefonischer Signalisierungssignale zum digitalen Endgerät als Reaktion auf die extrahierten Signalisierungsnachrichten nach dem Netzprotokoll.

7. - System nach einem beliebigen der Ansprüche 1 bis 6, bei dem die erste Ausrüstung (ECa) zudem Folgendes umfasst: ein Mittel (11a, 1a, 10a) zum Extrahieren und Auswerten von über die Telefonleitung empfangenen digitalen Daten- und Signalisierungsnachrichten nach dem Netzprotokoll des Signalisierungskanals (D) zu ihrer Übertragung als vierte digitale Signale zum Knoten (RO) und ein Mittel (10a, 1a, 11a) zum Einfügen der vom Knoten (RO) übertragenen Daten- und Signalisierungsnachrichten nach dem Netzprotokoll in den Signalisierungskanal (D), um diesen zu multiplexen mit den beiden digitalen Kanälen (B1, B2) zu deren Übertragung über die Teilnehmer-Telefonleitung (LN) zur zweiten Ausrüstung (EAa).

8. - System nach einem beliebigen der Ansprüche 1 bis 7, bei dem die Teilnehmer-Telefonleitung eine zweiadrige Leitung (LN) ist, die in jeder Übertragungsrichtung mindestens die beiden digitalen Multiplex-Kanäle (B1, B2) überträgt, wobei ein Signalisierungskanal (D) die Signalisierungsnachrichten unterstützt.
